# EUROPEAN PATENT APPLICATION

(11) **EP 4 741 746 A1**
(43) Date of publication of application: **13.05.2026**
(21) Application number: 25209031.1
(22) Date of filing: 16.10.2025
(51) Int. Cl.: F26B 3/04, F26B 13/00, F26B 13/10, F26B 21/30, F26B 21/55, H01M 4/04

(54) **DRYING APPARATUS FOR DRYING AN ELECTRODE**

(30) Priority: 12.11.2024 KR 20240159959
(71) Applicant: SAMSUNG SDI CO., LTD., Yongin-si, Gyeonggi-do 17084 (KR)
(72) Inventor: HWANG, Yeyeong, 17084 Yongin-Si, Gyeonggi-do (KR); KANG, Changhyun, 17084 Yongin-Si, Gyeonggi-do (KR); MOON, Jeunggi, 17084 Yongin-Si, Gyeonggi-do (KR); LEE, Eunhee, 17084 Yongin-Si, Gyeonggi-do (KR); LIM, Junghwan, 17084 Yongin-Si, Gyeonggi-do (KR); JANG, Kyeongho, 17084 Yongin-Si, Gyeonggi-do (KR); AHN, Hyejin, 17084 Yongin-Si, Gyeonggi-do (KR); LEE, Hansol, 17084 Yongin-Si, Gyeonggi-do (KR)
(74) Representative: Gulde & Partner

(57) **Abstract**

An apparatus for drying an electrode includes: a drying unit above an upper portion of a moving electrode plate, and to: spray hot air in a direction opposite to a traveling direction of the moving electrode plate to dry a slurry applied to a substrate; and suck gas that dried the slurry; an air supply unit to supply the hot air to the drying unit; and an exhaust unit to externally discharge the gas sucked into the drying unit. The drying unit is to control a spraying direction of the hot air sprayed onto the moving electrode plate.

## Description

### BACKGROUND

### 1. Field

Aspects of embodiments of the present disclosure relate to a drying apparatus for drying an electrode.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Secondary batteries are manufactured through various suitable kinds of processes. In more detail, in the electrode process among the secondary battery manufacturing processes, a slurry containing an active material is coated on a substrate, and then dried to manufacture a positive electrode or a negative electrode of a secondary battery.

Typically, a slurry coated on a substrate may be dried by evaporation of a solvent forming part of the slurry while passing through a drying unit. In this case, if the slurry dries unevenly depending on a location on the substrate, deterioration in a quality of the secondary battery may occur due to migration of a binder.

The above information disclosed in this Background section is for enhancement of understanding of the background of the present disclosure, and therefore, it may contain information that does not constitute related (or prior) art.

### SUMMARY

One or more embodiments of the present disclosure may be directed to a drying apparatus for drying an electrode (also be called an electrode drying apparatus) providing improved, i.e. uniform drying of a slurry on a substrate of an electrode.

The invention is defined by the appended claims. The description that follows is subjected to this limitation. Any disclosure lying outside the scope of said claims is only intended for illustrative as well as comparative purposes.

According to one or more embodiments of the present disclosure, a drying apparatus for drying an electrode (e.g. an electrode plate) includes: a drying unit positioned above an upper portion of a moving electrode plate, and configured to spray (e.g. direct) hot air in a direction opposite to a traveling direction of the moving electrode plate to dry a slurry applied to a substrate, and configured to suck in gas that dried the slurry; an air supply unit configured to supply the hot air to the drying unit; and an exhaust unit configured to externally discharge the gas sucked into the drying unit. The drying unit is further configured to control a spraying (e.g. blowing) direction of the hot air sprayed (e.g. directed) onto the moving electrode plate.

In an embodiment, the drying unit may include: a housing positioned above the upper portion of the moving electrode plate, and including an air supply chamber and an exhaust chamber which is separated from the air supply chamber; an air supply nozzle penetrating a lower surface of the housing, in communication with the air supply chamber, and configured to spray (e.g. direct) the hot air in a width direction of the moving electrode plate; an exhaust nozzle penetrating the lower surface of the housing, in communication with the exhaust chamber, and through which the gas that dried the slurry may be sucked in; and a rotating unit rotatably connected to the housing, and configured to control a direction of the hot air supplied to the moving electrode plate.

In an embodiment, the apparatus may further include a driving motor in the housing, and configured to rotate the rotating unit.

In an embodiment, the drying unit may further include a width-direction wind direction control unit in the air supply chamber within the housing, and configured to control a direction of the hot air supplied in the width direction of the moving electrode plate.

In an embodiment, the width-direction wind direction control unit may include: a fixed blade unit at a center of the air supply chamber; a plurality of first rotary blade units on one side of the fixed blade unit along a width direction of the air supply chamber, and rotatably coupled to the housing to allow an angle adjustment thereof; and a plurality of second rotary blade units on another side of the fixed blade unit along the width direction of the air supply chamber, and rotatably coupled to the housing to allow an angle adjustment thereof.

In an embodiment, the width-direction wind direction control unit may further include: a first driving unit in the housing, and configured to rotate the plurality of first rotary blade units to adjust the angle; and a second driving unit in the housing, and configured to rotate the plurality of second rotary blade units to adjust the angle.

In an embodiment, the first driving unit and the second driving unit may be configured to rotate the plurality of first rotary blade units and the plurality of second rotary blade units in a same direction as each other, or in different directions from each other.

In an embodiment, the air supply nozzle may be located forward with respect to the traveling direction of the moving electrode plate, and the exhaust nozzle may be located to face the air supply nozzle at a rear side with respect to the traveling direction of the moving electrode plate.

In an embodiment, the air supply nozzle and the exhaust nozzle may be slit-shaped, and may have a width longer than a width of the moving electrode plate. In other words, the air supply nozzle and the exhaust nozzle may have a thin and long slit shape along the width direction of the moving electrode plate, and may be longer than a width of the moving electrode plate.

In an embodiment, the drying unit may further include: an air supply connection unit protruding from an upper surface of the housing, coupled with the air supply unit, and in communications with the air supply chamber; and an exhaust connection unit protruding from the upper surface of the housing, combined with the exhaust unit, and connected to the exhaust chamber.

In an embodiment, the air supply connection unit may protrude from the upper surface of the housing in a central region of the housing, and may have a width smaller than a width of the air supply chamber.

In an embodiment, a plurality (e.g. two) of exhaust connection units may protrude from opposite ends of the housing to the upper surface of the housing, and may each have a width smaller than a width of the exhaust chamber.

In an embodiment, the air supply connection unit and the exhaust connection unit may not overlap with each other in a direction parallel to the traveling direction of the moving electrode plate.

In an embodiment, the width of the air supply connection unit may be greater than a width of the exhaust connection unit.

In an embodiment, the air supply unit may include: a hot air generating unit configured to generate the hot air; and an air supply duct connecting the hot air generating unit with the air supply connection unit, and through which the hot air may be supplied.

In an embodiment, the exhaust unit may include: an exhaust duct connected to the exhaust connection unit, and into which the gas that dried the slurry may flow; and a gas exhaust unit connected to the exhaust duct, and configured to force the gas to be externally discharged.

In an embodiment, the exhaust duct may include: a first exhaust duct connected to the exhaust connection unit located at one end of the housing; and a second exhaust duct connected to the exhaust connection unit located at another end of the housing.

In an embodiment, the exhaust duct may further include an exhaust duct connection unit connecting the first exhaust duct with the second exhaust duct.

In an embodiment, the drying unit may further include a perforation plate in at least one of the air supply chamber or the exhaust chamber, the perforation plate having a plurality of through holes through which the hot air may flow.

In an embodiment, the drying unit may include a plurality of drying units located along the traveling direction of the moving electrode plate.

According to some embodiments of the present disclosure, an electrode drying apparatus may uniformly or substantially uniformly supply hot air in a width direction of an electrode to uniformly or substantially uniformly dry a slurry coated on a substrate in the width direction.

According to some embodiments of the present disclosure, the electrode drying apparatus may be configured to control an injection direction of hot air, so as to uniformly or substantially uniformly supply hot air to the electrode to uniformly or substantially uniformly dry the slurry coated on the substrate.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a side view showing an example of an electrode drying apparatus according to some embodiments of the present disclosure.
FIG. 2 is a perspective view showing an example of a drying unit in an electrode drying apparatus according to some embodiments of the present disclosure.
FIG. 3 is a cross-sectional view taken along the line A-A of FIG. 2.
FIG. 4 is a cross-sectional view showing an example of an electrode being dried by a drying unit according to some embodiments of the present disclosure.
FIG. 5 is a cross-sectional view showing an example of a rotating unit operating in a drying unit according to some embodiments of the present disclosure.
FIG. 6 is a cross-sectional view showing an example of a width-direction wind direction control unit provided in a drying unit according to some embodiments of the present disclosure.
FIG. 7 is a bottom view showing an example of a drying unit disposed on an electrode according to some embodiments of the present disclosure.
FIG. 8 is a cross-sectional view showing an example of a width-direction wind direction control unit provided in a drying unit according to some embodiments of the present disclosure.
FIGS. 9-12 are cross-sectional views showing examples of a width-direction wind direction control unit operating in a drying unit according to some embodiments of the present disclosure.
FIG. 13 is a side view showing an example of an electrode drying apparatus according to an embodiment of the present disclosure.
FIG. 14 is a perspective view showing an example of an electrode drying apparatus according to an embodiment of the present disclosure.
FIG. 15 is a partial front view showing an example of an exhaust unit in an electrode drying apparatus according to an embodiment of the present disclosure.
FIG. 16 is a perspective view showing an example of a drying unit in an electrode drying apparatus according to an embodiment of the present disclosure.
FIG. 17 is a cross-sectional view taken along the line B-B of FIG. 16.
FIG. 18 is a cross-sectional view showing an example of a width-direction wind direction control unit provided in a drying unit according to an embodiment of the present disclosure.
FIG. 19 is a cross-sectional view showing an example of a drying unit having a perforation plate according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, the applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the following detailed description, the drying apparatus for drying an electrode (e.g. electron plate) may be referred to as an electrode drying apparatus.

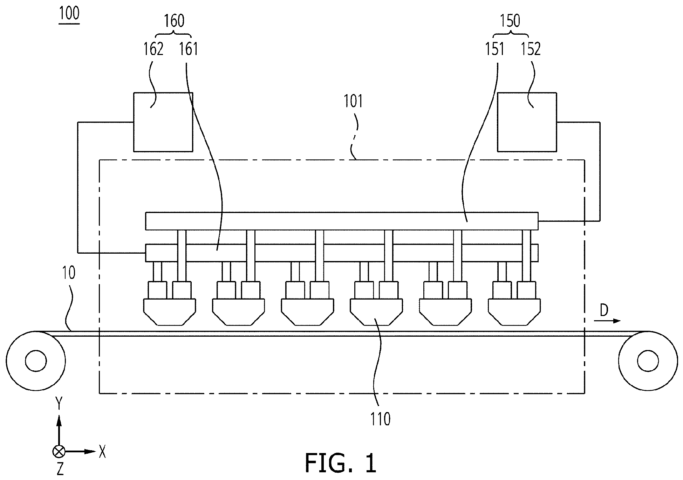

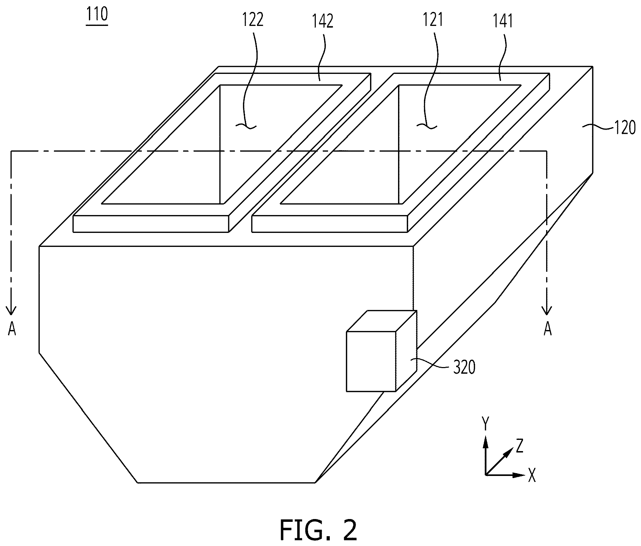

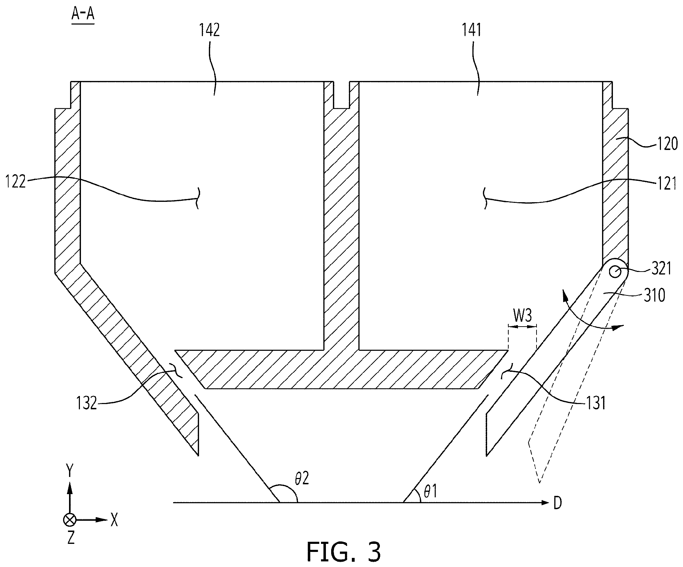

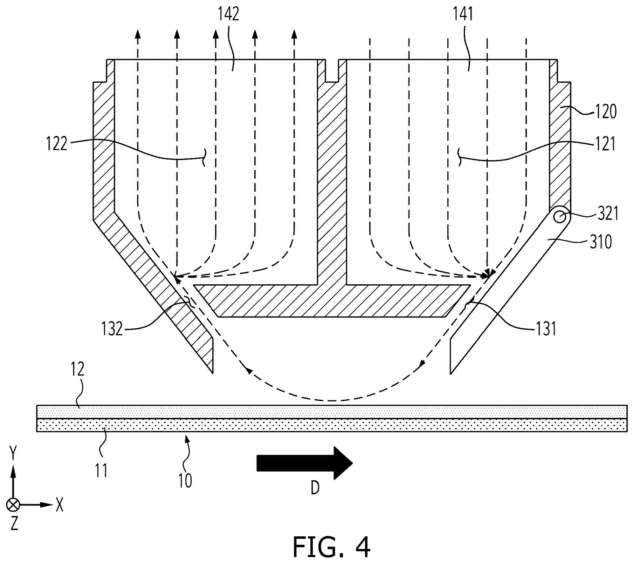

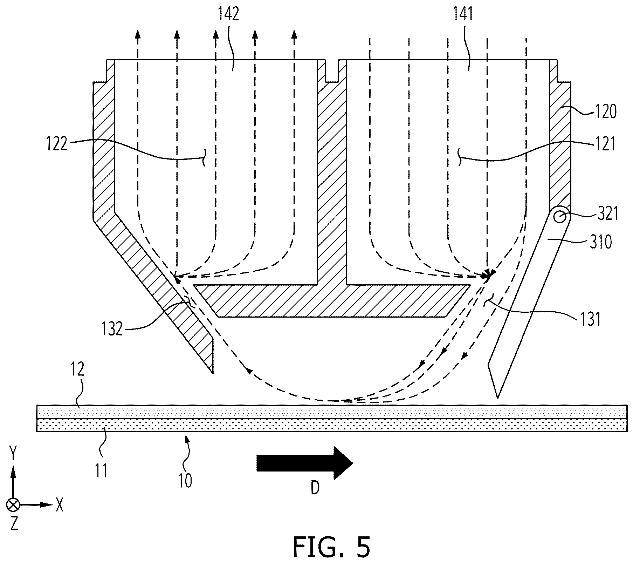

FIG. 1 is a side view showing an example of an electrode drying apparatus according to some embodiments of the present disclosure. FIG. 2 is a perspective view showing an example of a drying unit in an electrode drying apparatus according to some embodiments of the present disclosure. FIG. 3 is a cross-sectional view taken along the line A-A of FIG. 2. FIG. 4 is a cross-sectional view showing an example of an electrode being dried by a drying unit according to some embodiments of the present disclosure. FIG. 5 is a cross-sectional view showing an example of a rotating unit operating in a drying unit according to some embodiments of the present disclosure.

Referring to FIGS. 1 to 5, an electrode drying apparatus 100 according to some embodiments of the present disclosure may include a drying unit (e.g., a drying part, a dryer, or a blower) 110 that sprays (e.g. directs) hot air onto a moving electrode plate 10 to dry a slurry 12 applied to a substrate 11 of the electrode plate 10, an air supply unit (e.g., an air supply part or an air supply) 150 that supplies hot air to the drying unit 110, and an exhaust unit (e.g., an exhaust part or an exhaust) 160 that discharges gas sucked into the drying unit 110 to the outside. In alternative to the hot air, a high temperature gas (other than air, preferably with lower oxygen content) may be supplied to dry the slurry. The electrode drying apparatus 100 may further comprise transport means, e.g. a roll-to-roll conveyor, for moving the electrode plate 10 through the electrode drying apparatus 100 as shown in FIG. 1. The electrode drying apparatus 100 may therefore be suitable for drying the electrode plate in a roll-to-roll processing line.

The drying unit 110 may be disposed on top of (e.g., above) the moving electrode plate 10, and may spray (direct) hot air in an opposite direction of a travel direction D of the moving electrode plate 10 to dry the slurry 12 applied to the substrate 11. Further, the drying unit 110 may suck (e.g., may re-suck) the gas that dries or dried the slurry 12, and may discharge the gas to the outside. In other words, the drying unit 110 may suck (e.g., may re-suck) the gas that dries or dried the slurry 12, while spraying hot air onto the moving electrode plate 10.

In some embodiments, the drying unit 110 may include a housing 120 that is disposed (e.g. positioned) on (e.g., above) the upper portion of the electrode plate 10, and comprises an air supply chamber 121 and an (separate) exhaust chamber 122. That is, the housing 120 is divided into two separate chambers (regions). The drying unit 110 may include an air supply nozzle 131 that penetrates the lower surface of the housing 120, communicates with the air supply chamber 121, and sprays hot air in a width direction of the electrode plate 10. In other words, the housing 120 of the drying unit 110 comprises an air supply chamber 121, which is in communication with the air supply unit 150. And, the air supply chamber 121 comprises an adjustable air supply nozzle 131 configured to blow and direct the hot air from the supply chamber 121 onto electrode plate 10. The drying unit 110 may further include an exhaust nozzle 132, which penetrates the lower surface of the housing 120, communicates with the exhaust chamber 122, and allows the gas that dries or dried the slurry 12 to be sucked therethrough. In other words, the housing 120 of the drying unit 110 further comprises an exhaust chamber 122, which is in communication with the exhaust unit 160. And, the exhaust chamber 122 comprises an exhaust nozzle 132 (or exhaust inlet) configured to suck in evaporation gas and hot air into the exhaust chamber 122. Thus, the drying unit may provide a steady and directionally controlled flow of hot air onto and evaporation gas away from the surface of the electrode plate.

The housing 120 may have a hollow space therein, and the interior thereof may be divided into two regions (chambers), the air supply chamber 121 and the exhaust chamber 122. The air supply chamber 121 may be located forward with respect to the travel direction D of the electrode plate 10, and the exhaust chamber 122 may be located rearward with respect to the travel direction D of the electrode plate 10. This arrangement may provide a steady and controlled airflow in a direction against the travel direction D of the electrode plate 10 through the electrode drying apparatus 100.

The air supply nozzle 131 is formed to penetrate the lower surface of the housing 120, and is in communication with the air supply chamber 121 to spray (direct) hot air supplied to the air supply chamber 121 onto the slurry 12. The air supply nozzle 131 may be connected to the air supply chamber 121, and therefore, may be disposed forward with respect to the travel direction D of the electrode plate 10.

The exhaust nozzle 132 is formed to penetrate the lower surface of the housing 120, and is in communication with the exhaust chamber 122 to dry the slurry 12 and suck the gas flowing backward. Because the exhaust nozzle 132 is connected to the exhaust chamber 122, it may be disposed rearward with respect to the travel direction D of the electrode plate 10.

The air supply nozzle 131 may be disposed forward with respect to the travel direction D of the electrode plate 10, and the exhaust nozzle 132 may be disposed rearward with respect to the travel direction D of the electrode plate 10 to face the air supply nozzle 131.

The air supply nozzle 131 and the exhaust nozzle 132 may be formed in a thin and long slit shape along the width direction (z-axis direction) of the electrode plate 10. In other words, the (adjustable) air supply nozzle 131 and the exhaust nozzle 132 may be slit-shaped. Being slid shaped, the (adjustable) air supply nozzle 131 and the exhaust nozzle 132 may be positioned with a longitudinal side of slid shaped nozzles in parallel to the width W4 of the electrode plate 10. The width W2 of the longitudinal side of the slit-shaped (adjustable) air supply nozzle 131 (and the exhaust nozzle 132) may be longer than the width W4 of the electrode plate 10. In other words, the air supply nozzle 131 and the exhaust nozzle 132 may be formed longer than the width W4 of the electrode plate 10, so as to evenly supply hot air in the width direction of electrode plate 10 and then recover the hot air. Accordingly, hot air may be evenly supplied in the width direction of the electrode plate 10 through the air supply nozzle 131, and the gas that dries or dried the slurry 12 of the electrode plate 10 may be evenly sucked in the width direction of the electrode plate 10 through the exhaust nozzle 132, so that the slurry 12 may be uniformly or substantially uniformly dried in the width direction of the electrode plate 10. In other words, it may be possible to prevent or substantially prevent the slurry 12 from being overdried at both ends (e.g., opposite ends) of the electrode plate 10.

Referring to FIG. 3, the air supply nozzle 131 may be formed to be inclined to have an acute angle θ1 with respect to the travel direction D of the electrode plate. In other words, an opening width W3 of the air supply nozzle 131 may be adjustable. The air supply nozzle 131 may inclined in a direction opposite to the travel direction D of the electrode plate, and may supply hot air. The exhaust nozzle 132 may be formed to be inclined to have an obtuse angle θ2 with respect to the travel direction D of the electrode plate. The exhaust nozzle 132 may be supplied in the opposite direction of the travel direction D of the electrode plate, so that the gas that dries or dried the slurry 12 may be more easily sucked in.

The drying unit 110 may control a spraying (blowing) direction of hot air sprayed onto the electrode plate 10. In some embodiments, the drying unit 110 may include a rotating unit (e.g., a rotating part or a rotator) 310 that is rotatably coupled to the housing 120, and controls the direction of hot air supplied in the travel direction D in which the electrode plate 10 moves. That is, the width W3 of an opening (e.g. spacing) of the air supply nozzle 131 may be adjustable by means of the rotating unit (e.g., a rotating part or a rotator) 310 that is rotatably coupled to the housing 120. The drying unit 110 may further include a driving motor 320 that is disposed in the housing 120, and rotates the rotating unit 310. In some embodiments, the drive motor 320 may rotate a rotation shaft 321 coupled to the rotating unit 310, to adjust the rotation angle of the rotating unit 310.

Referring to FIG. 3, the rotating unit 310 may be rotatably coupled to an end of the air supply chamber 121 in the housing 120, and may control the direction and amount of hot air discharged to the air supply nozzle 131. In other words, as the rotating unit 310 rotates, a spacing (e.g. opening) of the air supply nozzle 131 may be adjusted in a direction parallel to or substantially parallel to the travel direction D of the electrode plate 10.

The angle of the rotating unit 310 may be adjusted by an operation of the driving motor 320. In some embodiments, when a relatively large amount of hot air is to be supplied because the slurry 12 is thick, as shown in FIG. 5, the rotating unit 310 may be further rotated in the travel direction D of the electrode plate 10 by an operation of the driving motor 320 to increase the spacing of the air supply nozzle 131. The rotating unit 310 may be continuously rotated within a suitable angular range (e.g., a predetermined angular range) by an operation of the driving motor 320.

The drying unit 110 may include an air supply connection unit (e.g., an air supply connection part or an air supply connector) 141 that protrudes from the upper surface of the housing 120, is coupled with the air supply unit 150, and communicates with the air supply chamber 121. The drying unit 110 may further include an exhaust connection unit (e.g., an exhaust connection part or an exhaust connector) 142 that protrudes from the upper surface of the housing 120, is coupled with the exhaust unit 160, and communicates with the exhaust chamber 122.

The air supply unit 150 may include a hot air generating unit (e.g., a hot air generation part or a hot air generator) 152 that generates hot air, and an air supply duct 151 that connects the hot air generating unit 152 with the air supply connection unit 141 and supplies the hot air. In other words, if (e.g., when) the air supply connection unit 141 and the hot air generating unit 152 are connected to each other by the air supply duct 151, and hot air is supplied from the hot air generating unit 152, hot air may be supplied to the air supply chamber 121 through the air supply duct 151 and the air supply connection unit 141.

The exhaust unit 160 may include an exhaust duct 161 connected to the exhaust connection unit 142, and into which gas that dries or dried the slurry 12 flows. The exhaust unit 160 may further include a gas exhaust unit (e.g., a gas exhaust part or a gas exhauster) 162 connected to the exhaust duct 161, and for forcing gas to flow to be discharged to the outside. In other words, if (e.g., when) the exhaust connection unit 142 and the gas exhaust unit 162 are connected to each other by the exhaust duct 161, and the gas exhaust unit 162 operates to force the gas to flow, the gas flowing into the exhaust chamber 122 through the exhaust duct 161 and the exhaust connection unit 142 may be discharged to the outside. As the gas exhaust unit 162 operates, the gas in the exhaust chamber 122 may be discharged to the outside, and a negative pressure may be applied to the exhaust nozzle 132 so that the gas that dries or dried the slurry may be more easily sucked. The gas exhaust unit 162 may be composed of any suitable device, such as a pneumatic pump or fan, which may force gas to flow and discharge the gas to the outside.

Referring to FIG. 1, a plurality of drying units 110 may be provided along the travel direction D of the electrode plate 10. Because the drying unit 110 may evenly dry the slurry in the width direction of the electrode plate 10, the plurality of drying units 110 may be provided along the travel direction D of the electrode plate 10 to concurrently (e.g., simultaneously or substantially simultaneously) dry a wider area with each other.

The plurality of drying units 110 may be connected to each of the air supply duct 151 and the exhaust duct 161, to concurrently (e.g., simultaneously or substantially simultaneously) supply hot air with each other, while sucking the gas that dries or dried the slurry and discharging the gas to the outside.

The electrode drying apparatus 100 may further include a chamber 101 in which the drying unit 110 is accommodated inside thereof, and through which an electrode plate 10 passes. In some embodiments, the chamber 101 may be formed longer along the travel direction D of the electrode plate 10, so that the moving electrode plate 10 may pass through the chamber 101. The chamber 101 may provide a sealed space so that external foreign substances, air flow, and/or the like do not affect the drying of the slurry. In some embodiments, the interior of the chamber 101 may be in a vacuum state. The electrode drying apparatus 100 may further include transport means, e.g. a roll-to-roll conveyor, for moving the electrode plate 10 through the chamber 101 of the electrode drying apparatus 100 in a travel direction D.

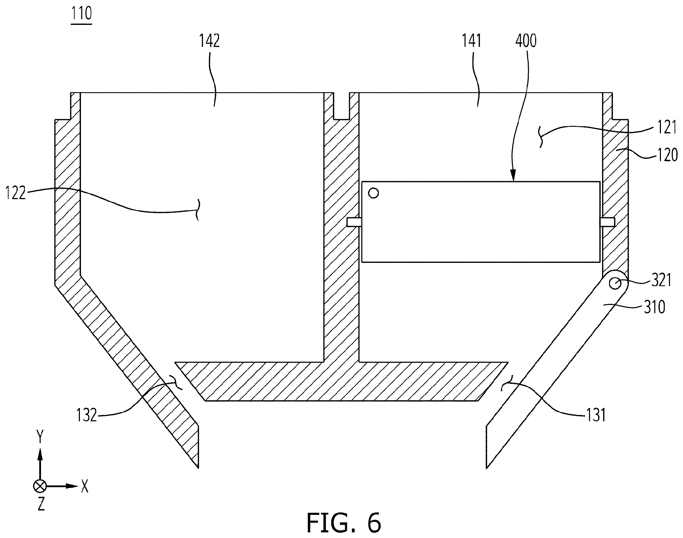

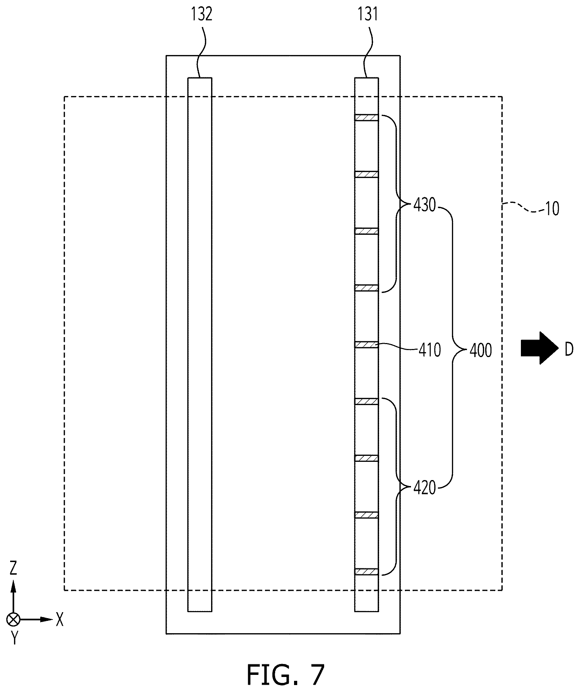

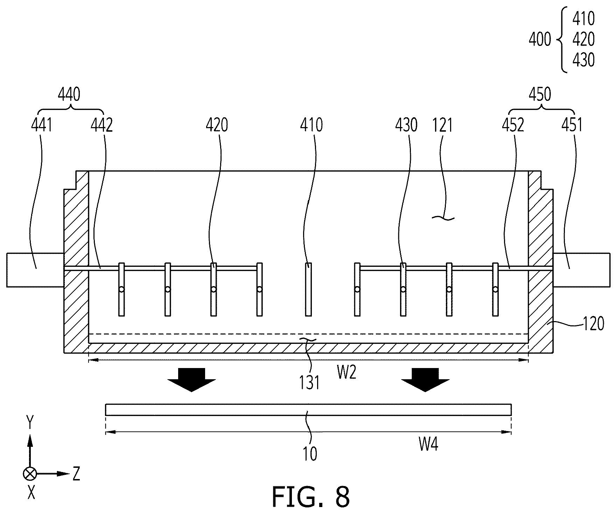

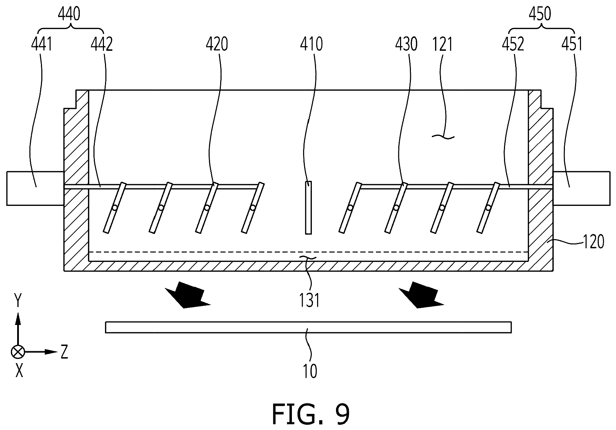

FIG. 6 is a cross-sectional view showing an example of a width-direction wind direction control unit provided in a drying unit according to some embodiments of the present disclosure. FIG. 7 is a bottom view showing an example of a drying unit disposed on an electrode according to some embodiments of the present disclosure. FIG. 8 is a cross-sectional view showing an example of a width-direction wind direction control unit provided in a drying unit according to some embodiments of the present disclosure. FIGS. 9 through 12 are cross-sectional views showing examples of a width-direction wind direction control unit operating in a drying unit according to some embodiments of the present disclosure.

Referring to FIGS. 6 to 12, the drying unit 110 is disposed in an air supply chamber 121 within the housing 120, and may further include a width-direction wind direction control unit (e.g., a width-direction wind direction control part) 400 that controls the direction of hot air supplied in the width direction of the electrode plate 10.

In some embodiments, the width-direction wind direction control unit 400 may include a fixed wing member 410 disposed (e.g. non-rotatably installed) at the center of the air supply chamber 121, a plurality of first rotary blade units 420 (e.g. rotatably installed) disposed on one side of the fixed wing member 410 along the width direction (z-axis direction) of the air supply chamber 121, and a plurality of second rotary blade units 430 disposed (e.g. rotatably installed) on the other side (e.g., an opposite side) of the fixed wing member 410 along the width direction (z-axis direction) of the air supply chamber 121, as shown in FIG. 8. The plurality of first rotary blade units 420 and the plurality of second rotary blade units 430 are rotatably coupled to the housing 120, so that an angle thereof may be adjusted. The adjustable first and second rotary blade units 420, 430 may reduce the left and right deviation and the difference in drying degree of the slurry 12 at the center and the edges of the electrode plate.

The plurality of first rotary blade units 420 may rotate individually, or may rotate concurrently (e.g., simultaneously or substantially simultaneously) with each other. The plurality of second rotary blade units 430 may rotate individually, or may rotate concurrently (e.g., simultaneously or substantially simultaneously) with each other.

The width-direction wind direction control unit 400 may further include a first driving unit (e.g., a first driver) 440 that is disposed in the housing 120 to adjust the angle by rotating the plurality of first rotary blade units 420, and a second driving unit (e.g.., a second driver) 450 that is disposed in the housing 120 to adjust the angle by rotating the plurality of second rotary blade units 430.

In some embodiments, the first driving unit 440 may include a first actuator 441, and a first rod 442 coupled to move linearly by the first actuator 441 to rotate the plurality of first rotary blade units 420. If (e.g., when) the first actuator 441 operates to cause the first rod 442 to move linearly, the plurality of first rotary blade units 420 may rotate concurrently (e.g., simultaneously or substantially simultaneously) with each other in response thereto.

The second driving unit 450 may include a second actuator, 451 and a second rod 452 coupled to move linearly by the second actuator 451 to rotate the plurality of second rotary blade units 430. If (e.g., when) the second actuator 451 operates to cause the second rod 452 to move linearly, the plurality of second rotary blade units 430 may rotate concurrently (e.g., simultaneously or substantially simultaneously) with each other in response thereto. However, the configuration for rotating the plurality of first rotary blade units 420 and the plurality of second rotary blade units 430 is not limited thereto, and any suitable driving device may be used, as long as the plurality of first rotary blade units 420 and the plurality of second rotary blade units 430 may be individually rotated or concurrently (e.g., simultaneously or substantially simultaneously) rotated with each other.

The first driving unit 440 and the second driving unit 450 may operate to rotate the plurality of first rotary blade units 420 and the plurality of second rotary blade units 430 in the same direction as each other, or in different directions from each other.

Referring to FIG. 9, in some embodiments, the first driving unit 440 may operate the first actuator 441 to protrude the first rod 442, so as to rotate the plurality of first rotary blade units 420 to the left based on the drawing. The second driving unit 450 may operate the second actuator 451 to insert the second rod 452, and rotate the plurality of second rotary blade units 430 to the left with an incline based on the drawing. In other words, the plurality of first rotary blade units 420 and the plurality of second rotary blade units 430 may be disposed parallel to or substantially parallel to each other, and may be disposed to supply hot air in a left inclined direction based on the drawing.

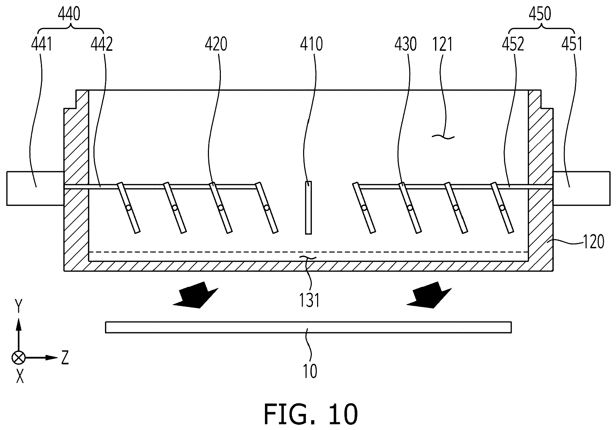

Referring to FIG. 10, in some embodiments, the first driving unit 440 may operate the first actuator 441 to insert the first rod 442, so as to rotate the plurality of first rotary blade units 420 to the right with an incline based on the drawing. The second driving unit 450 may rotate the plurality of second rotary blade units 430 in a right inclined direction based on the drawing by operating the second actuator 451, so that the second rod 452 protrudes. In other words, the plurality of first rotary blade units 420 and the plurality of second rotary blade units 430 may be disposed parallel to or substantially parallel to each other, and may be disposed to supply hot air in a right inclined direction based on the drawing.

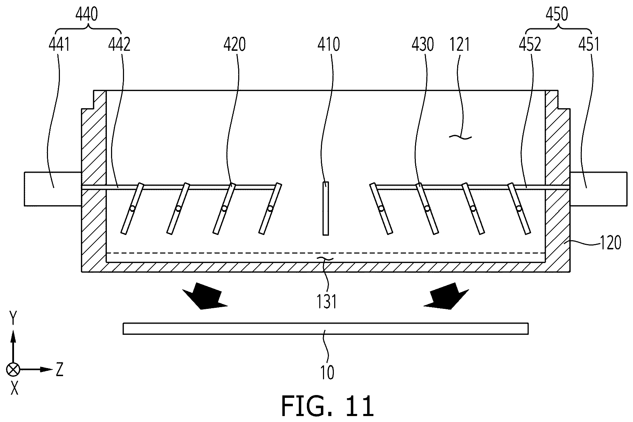

Referring to FIG. 11, in some embodiments, the first driving unit 440 may operate the first actuator 441 to protrude the first rod 442, so as to rotate the plurality of first rotary blade units 420 in a left inclined direction based on the drawing. The second driving unit 450 may rotate the plurality of second rotary blade units 430 in a right inclined direction based on the drawing by operating the second actuator 451 to protrude the second rod 452. In other words, the plurality of first rotary blade units 420 and the plurality of second rotary blade units 430 may be disposed to be inclined in opposite directions from each other, and to supply hot air in an outward direction of the fixed blade unit 410.

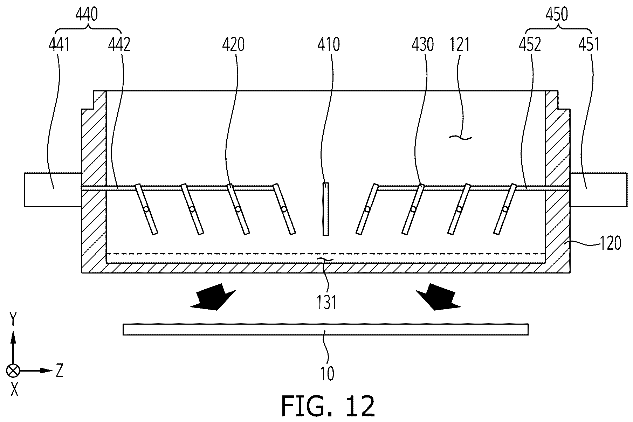

Referring to FIG. 12, in some embodiments, the first driving unit 440 may operate the first actuator 441 to insert the first rod 442, so as to rotate the plurality of first rotary blade units 420 in a right inclined direction based on the drawing. The second driving unit 450 may operate the second actuator 451 to insert the second rod 452, and rotate the plurality of second rotary blade units 430 to the left with an incline based on the drawing. In other words, the plurality of first rotary blade units 420 and the plurality of second rotary blade units 430 may be disposed to be inclined in opposite directions from each other, and to supply hot air toward the fixed blade unit 410.

The first driving unit 440 and the second driving unit 450 may operate at regular time intervals, or may operate continuously at a regular speed, so that the plurality of first rotary blade units 420 and the plurality of second rotary blade units 430 may rotate in the left and right directions to supply hot air.

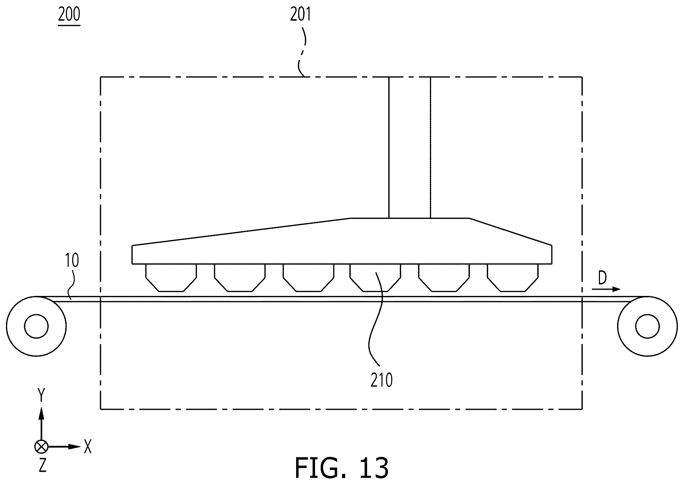

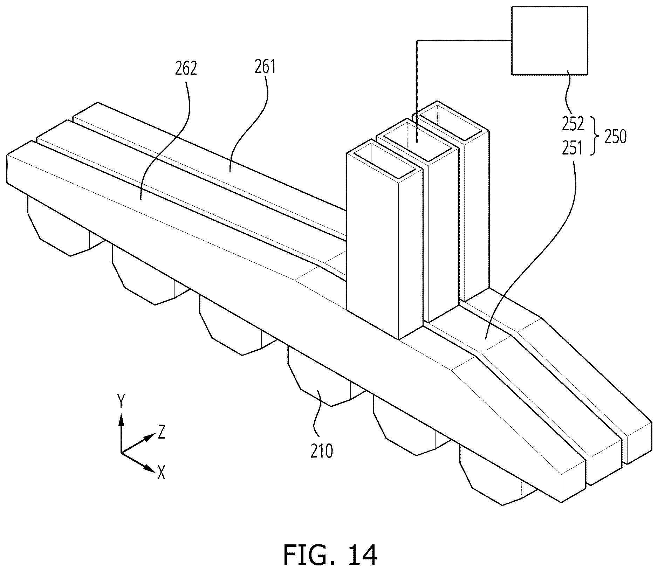

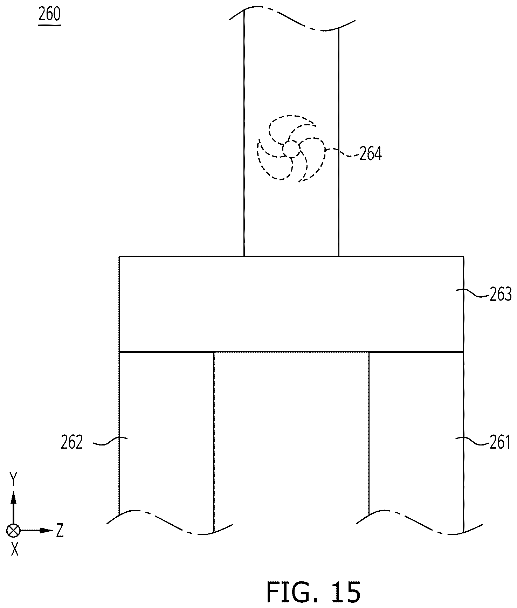

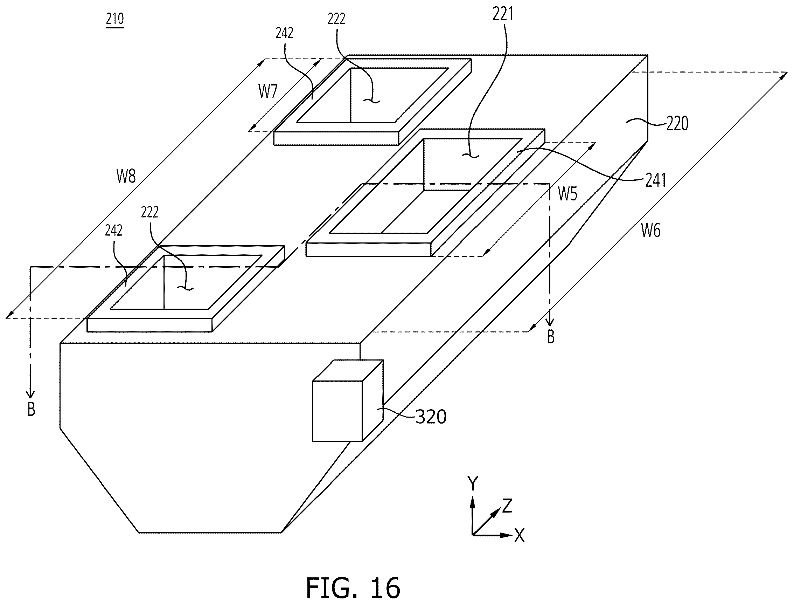

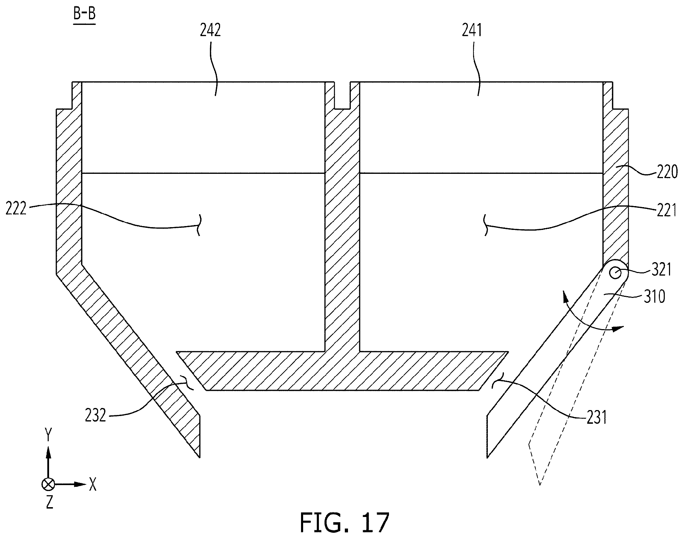

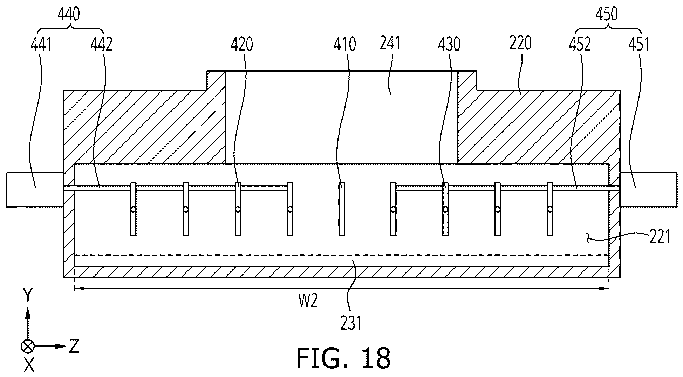

FIG. 13 is a side view showing an example of an electrode drying apparatus according to an embodiment of the present disclosure. FIG. 14 is a perspective view showing an example of an electrode drying apparatus according to an embodiment of the present disclosure. FIG. 15 is a partial front view showing an example of an exhaust unit in an electrode drying apparatus according to an embodiment of the present disclosure. FIG. 16 is a perspective view showing an example of a drying unit in an electrode drying apparatus according to another embodiment of the present disclosure. FIG. 17 is a cross-sectional view taken along the line B-B of FIG. 16. FIG. 18 is a cross-sectional view showing an example of a width-direction wind direction control unit provided in a drying unit according to an embodiment of the present disclosure.

Referring to FIGS. 13 to 18, an electrode drying apparatus 200 according to an embodiment of the present disclosure may include a drying unit (e.g., a drying part, a dryer, or a blower) 210 that sprays (directs) hot air onto a moving electrode plate 10 to dry a slurry 12 applied to a substrate 11, an air supply unit (e.g., an air supply part or an air supply) 250 that supplies hot air to the drying unit 210, and an exhaust unit (e.g., an exhaust part or an exhaust) 260 that discharges gas sucked into the drying unit 210 to the outside.

The drying unit 210 may be disposed on top of (e.g., above) the moving electrode plate 10, and may spray (direct) hot air in the opposite direction of the travel direction D of the moving electrode plate 10 to dry the slurry 12 applied to the substrate 11. The drying unit 210 may suck or re-suck the dried gas from the slurry 12, and may discharge the gas to the outside. In other words, the drying unit 210 may suck or re-suck the gas that dries or dried the slurry 12, while spraying hot air onto the moving electrode plate 10.

In some embodiments, the drying unit 210 may include a housing 220 that is disposed on (e.g., above) the upper portion of the electrode plate 10, and has an air supply chamber 221 and an exhaust chamber 222 formed by dividing the interior thereof into two regions (chambers). The drying unit 210 may include an air supply nozzle 231 that penetrates the lower surface of the housing 220, communicates with the air supply chamber 221, and sprays hot air in the width direction of the electrode plate 10. The drying unit 210 may further include an exhaust nozzle 232 that penetrates the lower surface of the housing 220, communicates with the exhaust chamber 222, and sucks gas that dries or dried the slurry 12.

The housing 220 has a hollow interior divided into two regions (chambers), which are the air supply chamber 221 and the exhaust chamber 222. The supply chamber 221 may be located forward with respect to the travel direction D of the electrode plate 10, and the exhaust chamber 222 may be located rearward with respect to the travel direction D of the electrode plate 10.

The air supply nozzle 231 is formed to penetrate the lower surface of the housing 220, and is in communication with the air supply chamber 221 to spray hot air supplied to the air supply chamber 221 onto the slurry 12. The air supply nozzle 231 is connected to the air supply chamber 221, and may therefore be disposed forward with respect to the travel direction D of the electrode plate 10.

The exhaust nozzle 232 is formed to penetrate the lower surface of the housing 220, and is in communication with the exhaust chamber 222 to dry the slurry 12 and suck the gas flowing backward. Because the exhaust nozzle 232 is connected to the exhaust chamber 222, it may be disposed rearward with respect to the travel direction D of the electrode plate 10.

The supply nozzle 231 may be disposed forward with respect to the travel direction D of the electrode plate 10, and the exhaust nozzle 232 may be disposed to face the supply nozzle 231 at the rear with respect to the travel direction D of the electrode plate 10.

The air supply nozzle 231 and the exhaust nozzle 232 may be formed in a thin and long slit shape along the width direction of the electrode plate 10. In other words, the (adjustable) air supply nozzle 231 and the exhaust nozzle 232 may be slit-shaped. Being slid shaped, the (adjustable) air supply nozzle 231 and the exhaust nozzle 232 may be positioned with a longitudinal side of slid shaped nozzles in parallel to the width W4 of the electrode plate 10. The width W2 of the longitudinal side of the slit-shaped (adjustable) air supply nozzle 231 (and the exhaust nozzle 232) may be longer than the width W4 of the electrode plate 10. The air supply nozzle 231 and the exhaust nozzle 232 may be formed longer than the width W4 of the electrode plate 10, so as to evenly supply hot air in the width direction of the slurry 12 and then recover the air. Accordingly, hot air is evenly supplied in the width direction of the electrode plate 10 through the air supply nozzle 231, and the gas that dries or dried the slurry 12 may be evenly sucked in the width direction of the electrode plate 10 through the exhaust nozzle 232, so that the slurry 12 may be uniformly dried in the width direction of the electrode plate 10. In other words, it may be possible to prevent or substantially prevent the slurry 12 from being overdried at both ends (e.g., opposite ends) of the electrode plate 10.

The air supply nozzle 231 may be formed to be inclined, so as to have an acute angle with respect to the travel direction D of the electrode plate. The exhaust nozzle 232 may be formed to be inclined, so as to have an obtuse angle with respect to the travel direction D of the electrode plate. As such, the air supply nozzle 231 may supply hot air in an opposite direction to the travel direction D of the electrode plate, and the exhaust nozzle 232 may receive hot air in the opposite direction to the travel direction D of the electrode plate, so that the gas that dries or dried the slurry may be more easily sucked.

The drying unit 210 may include an air supply connection unit (e.g., an air supply connection part or an air supply connector) 241 that protrudes from the upper surface of the housing 220, is coupled with the air supply unit 250, and is in communication with the air supply chamber 221. The drying unit 210 may further include an exhaust connection unit (e.g., an exhaust connection part or an exhaust connector) 242 that protrudes from the upper surface of the housing 220, is coupled with an exhaust unit (e.g., an exhaust part or an exhaust) 260, and is in communication with the exhaust chamber 222.

Referring to FIG. 16, the air supply connection unit 241 may protrude from a central region of the housing 220 to the upper surface of the housing 220. The air supply connection unit 241 may be formed to protrude into the air supply chamber 221. In other words, the air supply connection unit 241 may have one end protruding from the upper surface of the housing 220, and the other end (e.g., an opposite end) disposed inside the air supply chamber 221.

The exhaust connection unit 242 may protrude from both ends (e.g., opposite ends) of the housing 220 to the upper surface of the housing 220. The exhaust connection unit 242 may protrude from opposite ends of the housing 220 to the upper surface of the housing 220 and has a width smaller than a width of the exhaust chamber 222. The exhaust connection unit 242 may be formed in a plurality, preferably a pair, and may be formed at each end in the width direction (z-axis direction) of the housing 220. The exhaust connection unit 242 may be formed to protrude into the exhaust chamber 222. In other words, the exhaust connection unit 242 may have one end protruding from the upper surface of the housing 220, and the other end disposed inside the exhaust chamber 222.

The width W5 of the air supply connection unit 241 may be formed smaller than the width W6 of the air supply chamber 221, and the width W7 of the exhaust connection unit 242 may be formed smaller than the width W8 of the exhaust chamber 222. The air supply connection unit 241 and the exhaust connection unit 242 may be formed so as not to overlap with each other in a direction (i.e. x-axis direction) parallel to the travel direction D of the electrode plate 10. In other words, based on the width direction (z-axis direction) of the housing 220, a pair of exhaust connection units 242 may be formed at each end, and the air supply connection unit 241 may be formed at a suitable distance (e.g., a predetermined distance) from the exhaust connection unit 242. However, the present disclosure is not limited thereto, and the air supply connection unit 241 and the exhaust connection unit 242 may be formed so that at least one region overlaps in a direction parallel to the travel direction of the electrode plate 10.

The width W5 of the air supply connection unit 241 may be formed to be larger than the width W7 of the exhaust connection unit 242. Because hot air may be supplied through the air supply connection unit 241, the air supply connection unit 241 may be formed relatively larger than the exhaust connection unit 242. However, the present disclosure is not limited thereto, and the sum of the widths W7 of a pair of the exhaust connection units 242 may be the same or similar to the width W5 of the air supply connection unit 241. The sum of the widths W7 of the pair of exhaust connection units 242 may be larger than the width W5 of the air supply connection unit 241.

The width W7 of the air supply chamber 221 may correspond to the width W2 of the air supply nozzle 231. In this case, if (e.g., when) hot air is supplied through a relatively narrow air supply connection unit 241, the hot air may be supplied to the air supply nozzle 231 while the hot air expands in the width direction in the air supply chamber 221.

The drying unit 210 may control the spraying direction of hot air sprayed onto the electrode plate 10. In some embodiments, the drying unit 210 may include a rotating unit (e.g., a rotating part or a rotator) 310 that is rotatably coupled to the housing 220, and controls the direction of hot air supplied in the travel direction D in which the electrode plate 10 moves. The drying unit may further include a driving motor 320 that is disposed in the housing 220, and rotates the rotating unit 310. In some embodiments, the driving motor 320 may rotate a rotation shaft 321 coupled to the rotating unit 310 to adjust the rotation angle of the rotating unit 310.

Referring to FIG. 17, the rotating unit 310 is rotatably coupled to an end of the air supply chamber 221 in the housing 220, and may control the direction and amount of hot air discharged to the air supply nozzle 231. In other words, as the rotating unit 310 rotates, the spacing of the air supply nozzles 231 may be adjusted in a direction parallel to or substantially parallel to the travel direction D of the electrode plate 10.

The angle of the rotating unit 310 may be adjusted by the operation of the driving motor 320. In an example, if (e.g., when) the thickness of the slurry 12 is thick, and a relatively large amount of hot air is to be supplied, the rotating unit 310 may be further rotated in the travel direction D of the electrode plate 10 by the operation of the driving motor 320 to increase the spacing between the air supply nozzles 231. The rotating unit 310 may be continuously rotated within a desired angular range (e.g., a predetermined angular range) by the operation of the driving motor 320.

The drying unit 210 is disposed in the air supply chamber 221 within the housing 220, and may further include a width-direction wind direction control unit 400 that controls the direction of hot air supplied in the width direction of the electrode plate 10.

Referring to FIG. 18, in some embodiments, the width-direction wind direction control unit 400 may include a fixed blade unit 410 disposed at the center of the air supply chamber 221, a plurality of first rotary blade units 420 disposed on one side of the fixed blade unit 410 along the width direction of the air supply chamber 221, and a plurality of second rotary blade units 430 disposed on the other side (e.g., an opposite side) of the fixed blade unit 410 along the width direction of the air supply chamber 221. The plurality of first rotary blade units 420 and the plurality of second rotary blade units 430 are rotatably coupled to the housing 220, so that the angle may be adjusted.

The plurality of first rotary blade units 420 may rotate individually, or may rotate concurrently (e.g., simultaneously or substantially simultaneously) with each other. The plurality of second rotary blade units 430 may rotate individually, or may rotate concurrently (e.g., simultaneously or substantially simultaneously) with each other.

The width-direction wind direction control unit 400 may further include a first driving unit 440 that is disposed in the housing 220 and adjusts the angle by rotating the plurality of first rotary blade units 420, and a second driving unit 450 that is disposed in the housing 220 and adjusts the angle by rotating the plurality of second rotary blade units 430.

In some embodiments, the first driving unit 440 may include a first actuator 441, and a first rod 442 coupled to move linearly by the first actuator 441 to rotate the plurality of first rotary blade units 420. As such, if (e.g., when) the first actuator 441 operates to cause the first rod 442 to move linearly, the plurality of first rotary blade units 420 may rotate concurrently (e.g., simultaneously or substantially simultaneously) with each other in response thereto.

Further, the second driving unit 450 may include a second actuator 451, and a second rod 452 coupled to move linearly by the second actuator 451 to rotate the plurality of second rotary blade units 430. As such, if (e.g., when) the second actuator 451 operates to cause the second rod 452 to move linearly, the plurality of second rotary blade units 430 may rotate concurrently (e.g., simultaneously or substantially simultaneously) with each other in response thereto. The configuration for rotating the plurality of first rotary blade units 420 and the plurality of second rotary blade units 430 is not limited thereto, and may include any suitable driving device as long as the plurality of first rotary blade units 420 and the plurality of second rotary blade units 430 may be individually rotated or concurrently (e.g., simultaneously or substantially simultaneously) rotated with each other.

As illustrated in FIGS. 9 to 12, the first driving unit 440 and the second driving unit 450 may operate to rotate the plurality of first rotary blade units 420 and the plurality of second rotary blade units 430 in the same direction as each other, or in different directions from each other. The first driving unit 440 and the second driving unit 450 may operate at regular time intervals, or may operate continuously at a regular speed, so that the plurality of first rotary blade units 420 and the plurality of second rotary blade units 430 rotate in the left and right directions to supply hot air.

The air supply unit 250 may include a hot air generating unit 252 that generates hot air, and an air supply duct 251 that connects the hot air generating unit 252 with the air supply connection unit 241, and through which the hot air is supplied. In other words, when the air supply connection unit 241 and the hot air generating unit 252 are connected to each other by the air supply duct 251, and hot air is supplied from the hot air generating unit 252, the hot air may be supplied to the air supply chamber 221 through the air supply duct 251 and the air supply connection unit 241.

The exhaust unit 260 may include an exhaust duct connected to the exhaust connection unit 242 and into which gas that dries or dried the slurry 12 flows, and a gas exhaust unit 264 that is connected to the exhaust duct and forces the gas to flow to be discharged to the outside. The gas exhaust unit 264 may be composed of any suitable device, which may force gas to flow to be discharged to the outside, such as a pneumatic pump or fan.

In some embodiments, the exhaust duct may include a first exhaust duct 261 connected to the exhaust connection unit 242 formed at one end of the housing 220, a second exhaust duct 262 connected to the exhaust connection unit 242 formed at the other end (e.g., an opposite end) of the housing 220, and an exhaust duct connection unit 263 connecting the first exhaust duct 261 with the second exhaust duct 262 to each other. A fan-shaped gas exhaust unit 264 may be provided in the exhaust duct connection unit 263 to force the gas inside the first exhaust duct 261 and the second exhaust duct 262 to flow concurrently (e.g., simultaneously or substantially simultaneously) with each other, and be discharged to the outside.

In the housing 220, the supply connection unit 241 is formed in the central region, and a pair of exhaust connection units 242 are formed at both ends (e.g., opposite ends), so that the first exhaust duct 261 and the second exhaust duct 262 are disposed at both ends (e.g., opposite ends), and the air supply duct 251 may be disposed between the first exhaust duct 261 and the second exhaust duct 262, as shown in FIG. 14. The arrangement of the air supply duct 251, the first exhaust duct 261, and the second exhaust duct 262 is not limited thereto, and may be configured in any suitable shape as long as it may be connected to the air supply connection unit 241 and a pair of exhaust connection units 242.

Referring to FIG. 13, a plurality of drying units 210 may be provided along the travel direction D of the electrode plate 10. Because the drying unit 210 may evenly dry the slurry in the width direction of the electrode plate 10, the plurality of drying units 210 may be provided along the travel direction D of the electrode plate 10 to concurrently (e.g., simultaneously or substantially simultaneously) dry a wider region.

The electrode drying apparatus 200 may further include a chamber 201 in which the drying unit 210 is accommodated inside, and through which an electrode plate 10 passes. In some embodiments, the chamber 201 may be formed longer along the travel direction D of the electrode plate 10, so that the traveling electrode plate 10 may pass through the chamber 201. The chamber 201 may provide a sealed space so that external foreign substances or air flow do not affect the drying of the slurry. In some embodiments, the interior of the chamber 201 may be in a vacuum state.

Referring to FIG. 14, the plurality of drying units 210 may connected to the air supply duct 251 and the exhaust ducts 261 and 262, to concurrently (e.g., simultaneously or substantially simultaneously) supply hot air with each other, while sucking the gas that dries or dried the slurry and discharging the gas to the outside.

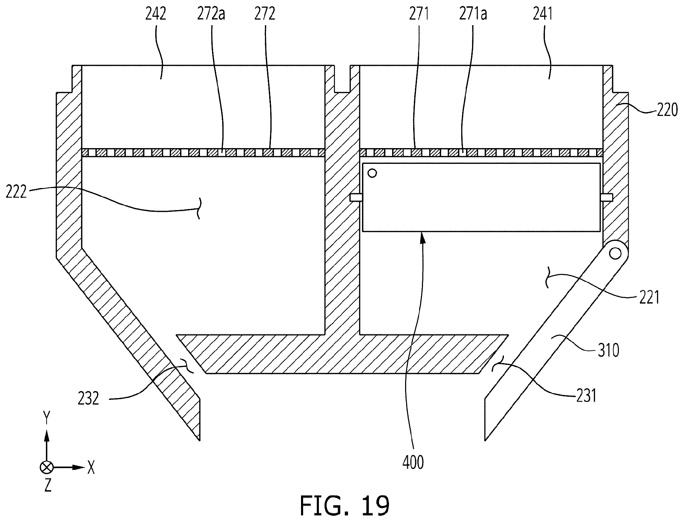

FIG. 19 is a cross-sectional view showing an example of a drying unit having a perforation plate according to an embodiment of the present disclosure.

Referring to FIG. 19, the drying unit 210 may further include an air supply perforation plate 271 having a plurality of through holes 271a through which supplied hot air flows, and an exhaust perforation plate 272 having a plurality of through holes 272a through which gas discharged after drying the slurry flows. As illustrated in FIG. 19, both the air supply perforation plate 271 and the exhaust perforation plate 272 may be provided, but the present disclosure is not limited thereto, and in another embodiment, only one of the air supply perforation plate 271 or the exhaust perforation plate 272 may be provided.

In some embodiments, the air supply perforation plate 271 may be disposed at the end of the air supply connection unit 241 at a portion where the air supply connection unit 241 and the air supply chamber 221 are connected to each other. The air supply perforation plate 271 may be provided in the air supply chamber 221. In this case, the air supply perforation plate 271 may be disposed at the upper side of the width-direction wind direction control unit 400, so as not to interfere with the width-direction wind direction control unit 400 included in the air supply chamber 221. In other words, the air supply perforation plate 271 may be disposed above the plurality of first rotary blade units and the plurality of second rotary blade units, so as not to interfere with the rotation of the plurality of first rotary blade units and the plurality of second rotary blade units in the width-direction wind direction control unit 400. The air supply perforation plate 271 may further improve the uniformity of the air flow as to be effectively directed by the width-direction wind direction control unit 400 and the air supply nozzle 231.

In some embodiments, at least one of an air supply perforation plate or an exhaust perforation plate may be disposed in the drying unit of the electrode drying apparatus.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A drying apparatus (100) for drying an electrode, the drying apparatus (100) comprising:
a drying unit (110, 210) positioned above an upper portion of a moving electrode plate (10), and configured to spray hot air in a direction opposite to a traveling direction of the moving electrode plate (10) to dry a slurry (12) applied to a substrate (11) of the moving electrode plate (10), and configured to suck in gas that dried the slurry (12);
an air supply unit (150, 250) configured to supply the hot air to the drying unit (110, 210); and
an exhaust unit (160, 260) configured to externally discharge the gas sucked into the drying unit (110, 210),
wherein the drying unit (110, 210) is further configured to control a spraying direction of the hot air sprayed onto the moving electrode plate (10).

2. The drying apparatus (100) as claimed in claim 1, wherein the drying unit (110, 210) comprises:
a housing (120, 220) positioned above the upper portion of the moving electrode plate (10), and comprising an air supply chamber (121, 221) and an exhaust chamber (122, 222) which is separated from the air supply chamber (121, 221);
an air supply nozzle (131, 231) penetrating a lower surface of the housing (120, 220), in communication with the air supply chamber (121, 221), and configured to spray the hot air in a width direction of the moving electrode plate (10);
an exhaust nozzle (132, 232) penetrating the lower surface of the housing (120, 220), in communication with the exhaust chamber (122, 222), and through which the gas that dried the slurry (12) is sucked in; and
a rotating unit (310) rotatably connected to the housing (120, 220), and configured to control a direction of the hot air supplied to the moving electrode plate (10).

3. The drying apparatus (100) as claimed in claim 2, further comprising a driving motor (320) in the housing (120, 220), and configured to rotate the rotating unit (310).

4. The drying apparatus (100) as claimed in one of claims 2 or 3, wherein the drying unit (110, 210) further comprises a width-direction wind direction control unit (400) in the air supply chamber (121) within the housing (120, 220), and configured to control a direction of the hot air supplied in the width direction (z-axis direction) of the moving electrode plate (10).

5. The drying apparatus (100) as claimed in claim 4, wherein the width-direction wind direction control unit (400) comprises:
a fixed blade unit (410) at a center of the air supply chamber (121, 221);
a plurality of first rotary blade units (420) on one side of the fixed blade unit (410) along a width direction (z-axis direction) of the air supply chamber (121), and rotatably coupled to the housing (120, 220) to allow an angle adjustment thereof; and
a plurality of second rotary blade units (430) on another side of the fixed blade unit (410) along the width direction (z-axis direction) of the air supply chamber (121, 221), and rotatably coupled to the housing (120, 220) to allow an angle adjustment thereof.

6. The drying apparatus (100) as claimed in claim 5, wherein the width-direction wind direction control unit (400) further comprises:
a first driving unit (440) in the housing (120, 220), and configured to rotate the plurality of first rotary blade units (420) to adjust the angle; and
a second driving unit (450) in the housing (120, 220), and configured to rotate the plurality of second rotary blade units (430) to adjust the angle.

7. The drying apparatus (100) as claimed in at least one of claims 2 to 6, wherein the air supply nozzle (131, 231) is located forward with respect to the traveling direction of the moving electrode plate (10), and
wherein the exhaust nozzle (132, 232) is located to face the air supply nozzle (131, 231) at a rear side with respect to the traveling direction of the moving electrode plate (10).

8. The drying apparatus (100) as claimed in at least one of claims 2 to 7, wherein the air supply nozzle (131, 231) and the exhaust nozzle (132, 232) are slit-shaped, and each have a width (W2) longer than a width (W4) of the moving electrode plate (10).

9. The drying apparatus (100) as claimed in at least one of claims 2 to 8, wherein the drying unit (110, 210) further comprises:
an air supply connection unit (141, 241) protruding from an upper surface of the housing (120, 220), coupled with the air supply unit (150, 250), and in communication with the air supply chamber (121, 221); and
an exhaust connection unit (141, 242) protruding from the upper surface of the housing (120, 220), combined with the exhaust unit (160, 260), and connected to the exhaust chamber (122, 222).

10. The drying apparatus (100) as claimed in claim 9, wherein the air supply connection unit (241) protrudes from the upper surface of the housing (220) in a central region of the housing (220), and has a width (W5) smaller than a width (W6) of the air supply chamber (221).

11. The drying apparatus (100) as claimed in claim 10, wherein a plurality of exhaust connection units (242) protrude from opposite ends of the housing (220) to the upper surface of the housing (220), and each have a width (W7) smaller than a width (W8) of the exhaust chamber (222).

12. The drying apparatus (100) as claimed in claim 11, wherein the air supply connection unit (241) and the exhaust connection unit (242) do not overlap with each other in a direction (x-axis direction) parallel to the traveling direction (D) of the moving electrode plate (10).

13. The drying apparatus (100) as claimed in at least one of claims 9 to 12, wherein the air supply unit (250) comprises:
a hot air generating unit (252) configured to generate the hot air; and
an air supply duct (251) connecting the hot air generating unit (252) with the air supply connection unit (241), and through which the hot air is supplied.

14. The drying apparatus (100) as claimed in at least one of claims 9 to 13, wherein the exhaust unit (160, 260) comprises:
an exhaust duct (161, 261, 262) connected to the exhaust connection unit (142, 242);and
a gas exhaust unit (162, 264) connected to the exhaust duct (161, 261, 262), and configured to force the gas to be externally discharged.

15. The drying apparatus (100) as claimed in at least one of claims 2 to 14, wherein the drying unit (110, 210) further comprises a perforation plate (271) in at least one of the air supply chamber (121, 221) or the exhaust chamber (122, 222), the perforation plate have a plurality of through holes (271a, 272a) through which the hot air flows.
